# EUROPEAN PATENT SPECIFICATION

(11) **EP 4 123 223 B1**
(45) Date of publication and mention of the grant of the patent: **06.05.2026**
(21) Application number: 21772462.4
(22) Date of filing: 15.03.2021
(51) Int. Cl.: F23G 5/027, F23G 5/20, F23G 5/30, F23G 5/46, F23G 7/10, F23K 5/00

(54) **HEAT TREATMENT SYSTEM**
WÄRMEBEHANDLUNGSSYSTEM
SYSTÈME DE TRAITEMENT THERMIQUE

(30) Priority: 18.03.2020 JP 2020047716
(43) Date of publication of application: 25.01.2023
(73) Proprietor: Sumitomo Heavy Industries, Ltd., Tokyo 141-6025 (JP)
(72) Inventor: AGAWA, Ryuichi, Tokyo 141-0031 (JP); TETSUYAMA, Ishhu, Tokyo 141-0031 (JP)
(74) Representative: Walcher, Armin
(86) International application number: PCT/JP2021/010364
(87) International publication number: WO 2021/187416

(56) References cited:
- EP-A1- 2 631 220
- JP-A- 2003 279 013
- JP-A- 2004 116 815
- JP-A- 2012 031 356
- JP-A- 2018 538 502
- JP-A- H1 130 411
- US-A- 5 728 196

## Description

### Technical Field

The present invention relates to a heat treatment system.

### Background Art

In some heat treatment systems that perform waste treatment or the like, there is a heat treatment system using a co-current rotary kiln. The co-current rotary kiln has a cylindrical rotary furnace that rotates around an axis and performs treatment by introducing a heating burner and waste from the same end part of the rotary furnace in the same direction (for example, refer to PTL 1). In the rotary kilns, there is a so-called counter-current rotary kiln that performs treatment by introducing the heating burner and the waste from the different end parts of the rotary furnace in an opposite direction. Compared to the counter-current rotary kiln, the above-described co-current rotary kiln can perform the treatment at a high temperature without unevenness in a short time, and is suitable for the waste treatment. PTL 2 discloses a heat treatment system comprising a pyrolysis furnace that pyrolyses a raw material to produce a pyrolysis product (i.e. pyrolysis gas); and a co-current rotary kiln that heats an object to be heated (i.e. cement raw material) using the pyrolysis product produced in the pyrolysis furnace. Waste heat from an air quenching cooler is used to elevate the air temperature for the pyrolysis furnace by means of a gas-air heater.

Incidentally, fossil fuels such as heavy oil and city gas have been conventionally used as a fuel for the heating burner of the co-current rotary kiln.

### Citation List

### Patent Literature

[PTL 1] Japanese Unexamined Patent Publication No. 2010-216763
[PTL 2] EP 2631220 A1

### Summary of Invention

### Technical Problem

However, in recent years, because of issues such as a climate change caused by an increase in CO₂ emissions, restrictions on use of the fossil fuel have become stricter, and it has become desirable to use alternative fuels other than the fossil fuel.

The present invention has been made in view of such points, and an object of the present invention is to provide a heat treatment system capable of performing heat treatment of an object to be heated such as waste without using a fossil fuel as a main fuel in the co-current rotary kiln.

### Solution to Problem

A heat treatment system according to one aspect of the present invention includes a pyrolysis furnace that pyrolyzes a raw material to produce a pyrolysis product and a co-current rotary kiln that heats an object to be heated using the pyrolysis product produced in the pyrolysis furnace, in which the pyrolysis furnace includes a main body container configured to pyrolyze the raw material to produce the pyrolysis product, a separation part configured to separate a circulation material from a high-temperature fluid, a first duct configured to send the high-temperature fluid containing the pyrolysis product and the circulation material from the main body container to the separation part, a second duct configured to return the circulation material separated by the separation part to the main body container, and a third duct configured to send the high-temperature fluid from which the circulation material has been removed and containing the pyrolysis product to the rotary kiln.

According to the aspect, in the co-current rotary kiln, the pyrolysis product produced in the pyrolysis furnace can be used to heat the object to be heated, so that the heat treatment of the object to be heated can be performed at a high temperature in a short time without using a fossil fuel as a main fuel.

The heat treatment system may further include a heat recovery device that recovers heat of exhaust gas exhausted from the rotary kiln.

The heat treatment system may further include a device that uses heat of exhaust gas exhausted from the rotary kiln as a heat source for the pyrolysis furnace.

The object to be heated may be waste.

The raw material may include a biomass raw material.

The heat treatment system may be configured such that the pyrolysis product produced in the pyrolysis furnace is sent to the rotary kiln without being heat-recovered.

### Advantageous Effects of Invention

According to the present invention, it is possible to provide a heat treatment system capable of performing heat treatment of an object to be heated without using a fossil fuel as a main fuel in the co-current rotary kiln.

### Brief Description of Drawings

Fig. 1 is a schematic diagram showing an outline of a configuration of a heat treatment system not covered by the present invention.
Fig. 2 is a schematic diagram showing an outline of another configuration of the heat treatment system according to the present invention.
Fig. 3 is a schematic diagram showing an outline of still another configuration of the heat treatment system not covered by the present invention.

### Description of Embodiments

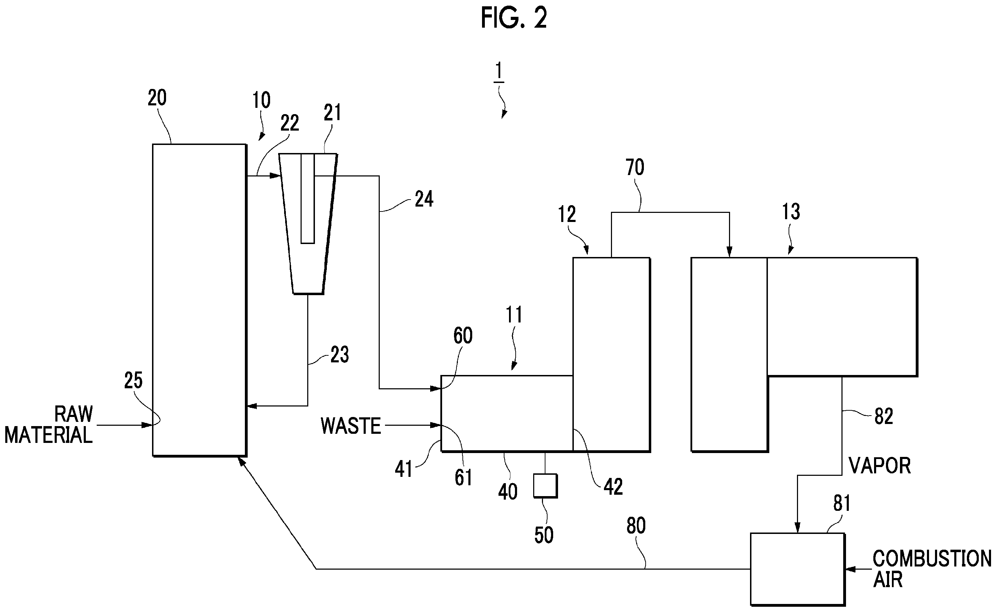

Hereinafter, embodiments will be described with reference to the drawings. The same elements are denoted by the same reference numerals, and overlapping description is omitted. Further, the dimensional ratios in the drawings are not limited to the ratios shown in the drawings. The embodiment according to Fig. 2 is an exemplification for describing the present invention, and the present invention is not limited to the embodiment.

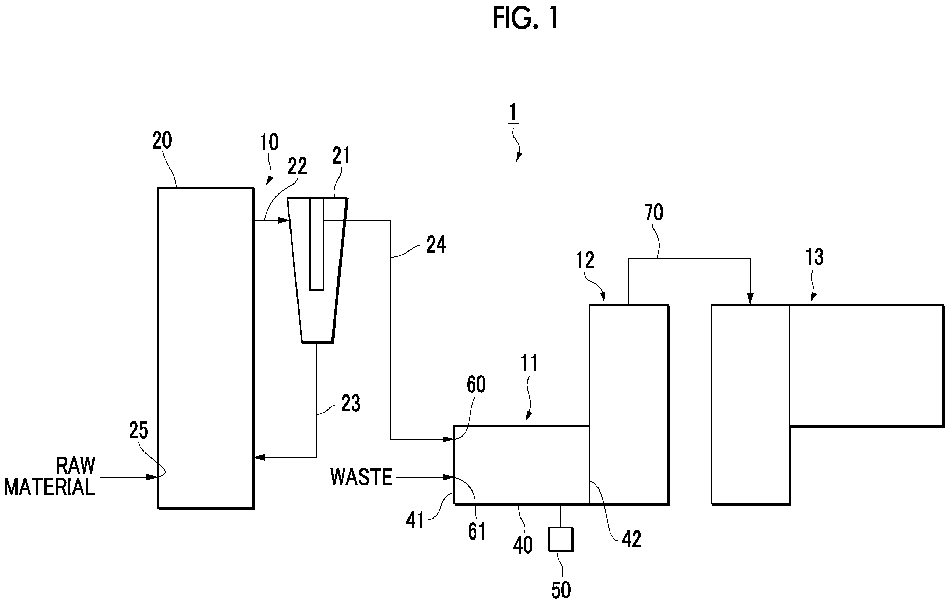

Fig. 1 is a schematic diagram showing an example of a configuration of a heat treatment system 1 according to an embodiment not covered by the present invention. The heat treatment system 1 includes a pyrolysis furnace 10 that pyrolyzes a raw material to produce a pyrolysis product, a co-current rotary kiln 11 that heats an object to be heated using the pyrolysis product produced in the pyrolysis furnace 10, a secondary combustion chamber 12 that performs secondary combustion of exhaust gas exhausted from the rotary kiln 11, and a heat recovery device 13 that recovers heat of the exhaust gas exhausted from the rotary kiln 11.

The pyrolysis furnace 10 is, for example, a circulating fluidized bed type gasifier and includes, for example, a main body container 20, which is a furnace, a cyclone type separation part 21, a first duct 22 that connects an upper part of the main body container 20 and an upper part of the separation part 21, a second duct 23 that connects a lower part of the separation part 21 and a lower part of the main body container 20, and a third duct 24 that connects the separation part 21 and the rotary kiln 11. In the present specification, "upper" is upward in a vertical direction, and "lower" is downward in the vertical direction.

The main body container 20 has a long cavity in an up-down direction, and can pyrolyze the raw material to produce the pyrolysis product while raising a combustion/flowing air, a circulation material, the raw material, or the like which are introduced into the cavity. The main body container 20 is formed with an introduction part 25 for introducing the raw material. As the raw materials, for example, woody biomass, which is a non-fossil fuel, and waste such as waste tires, waste plastics, and sludge are used. As the circulation materials, for example, fine particles such as silica sand that flows at a high temperature are used.

An inner wall of the main body container 20 is made of a refractory material, and the main body container 20 has a structure capable of preventing heat dissipation to the outside. A raw material supply system (not shown) that introduces the raw material into the introduction part 25 includes, for example, a drying device, a hopper, a screw feeder, a conveyor, a raw material supply pipe, or the like. The raw material supply system is configured to store the raw material dried by the drying device in the hopper, send the raw material in the hopper to the conveyor by a predetermined amount using a screw feeder, convey the predetermined amount of the raw material from the conveyor to the raw material supply pipe, and introduce the raw material into the main body container 20 from the introduction part 25 of the raw material supply pipe.

In addition, a combustion air supply system (not shown) for introducing combustion air is connected to the main body container 20. The combustion air supply system includes, for example, an air supply pipe connected to the lower part of the main body container 20, a dust removing device for separating dust, dirt, or the like from the combustion air, and a blower for boosting the combustion air.

The first duct 22 can send a high-temperature fluid containing the pyrolysis product, the circulation material, and impurities from the upper part of the main body container 20 to the upper part of the separation part 21. Impurities mentioned herein include fine particles of the powdered circulation material and fly ash.

The separation part 21 is capable of swirling the high-temperature fluid sent from the pyrolysis furnace 10 and separating the circulation material from the high-temperature fluid by a centrifugal separation action.

The second duct 23 is capable of returning the circulation material separated by the separation part 21 from the lower part of the separation part 21 to the lower part of the main body container 20. The third duct 24 is capable of sending the high-temperature fluid from which the circulation material has been removed and containing the pyrolysis product including fuel gas and impurities to a first end part of the rotary kiln 11 which will be described later. Therefore, the pyrolysis furnace 10 is configured such that the pyrolysis product produced in the pyrolysis furnace 10 is sent to the rotary kiln 11 without being heat-recovered by a heat exchanger or the like (the temperature is not lowered).

The co-current rotary kiln 11 has a cylindrical rotary furnace 40. The rotary furnace 40 has a first end part 41 at one end part in the axial direction thereof and a second end part 42 at the other end part. The rotary kiln 11 is inclined so that, for example, the first end part 41 is at a position higher than the second end part 42. The rotary kiln 11 includes a driving device 50, and is capable of rotating the rotary furnace 40 around an axis by the driving device 50. The co-current rotary kiln 11 is configured such that a total length in the axial direction is shorter than that of the counter-current rotary kiln and, for example, a ratio (L/D) of the total length L in the axial direction to a diameter D of the cylinder is about 3 or more and 5 or less.

The third duct 24 is connected to the first end part 41, and a first introduction part 60 for the fuel gas is formed at the first end part 41. In addition, a second introduction part 61 for introducing the object to be heated is formed at the first end part 41. For example, the second introduction part 61 is connected to a carry-in mechanism with a conveyor (not shown) for carrying the object to be heated into the second introduction part 61. The first introduction part 60 is provided at a position higher than the second introduction part 61 or at a position lower than the second introduction part 61. The object to be heated is, for example, waste. The second end part 42 is an exhaust gas outflow part and is connected to the lower part of the secondary combustion chamber 12. In addition, a recover and carry-out device for recovering and carrying out the fluid exhausted from the rotary kiln 11 may be connected to the second end part 42.

The secondary combustion chamber 12 has a main body that is long in the up-down direction, and a heating burner (not shown) is attached to the lower part thereof. In addition, the secondary combustion chamber 12 has a device that supplies a substance that promotes secondary combustion of gas, a substance that promotes decomposition of gas, or the like. For example, the secondary combustion chamber 12 is provided with a heating burner and an air supply part, as an example. The secondary combustion chamber 12 and the heat recovery device 13 are connected by a fourth duct 70.

The heat recovery device 13 includes, for example, a boiler. The heat recovered by the heat recovery device 13 can be used, for example, as a heat source for the pyrolysis furnace 10. As an example, the heat recovery device 13 includes a duct through which the exhaust gas flows, and includes a plurality of the heat exchangers in the duct. The heat exchanger includes, for example, a heat transfer pipe provided with a fin on the surface, and is capable of flowing water or water vapor through the heat transfer pipe to exchange heat between the heat transfer pipe in the duct and the exhaust gas. As will be described later, the vapor generated by recovering the heat of the exhaust gas can be used as a heat source for raising the temperature of the combustion air of the pyrolysis furnace 10.

In the heat treatment system 1 configured as described above, the following heat treatment is performed. In the pyrolysis furnace 10, the biomass raw material or the raw material of waste is pyrolyzed, and the pyrolysis product is produced and is sent to the separation part 21. At this time, in the main body container 20, by the combustion/flowing air introduced from the introduction part 25, a solid matter including the raw material and the circulation material flows and the raw material is burned at, for example, 800°C to 900°C while flowing. As a result, the pyrolysis product is produced. In the separation part 21, the circulation material is separated by the centrifugal separation action. The separated circulation material is returned to the pyrolysis furnace 10. After the circulation material is removed, the pyrolysis product containing the fuel gas is sent to the first end part 41 of the co-current rotary kiln 11. In the rotary kiln 11, in a state where the rotary furnace 40 is rotated around the axis, the pyrolysis product is introduced from the first introduction part 60 of the first end part 41 and the object to be heated of the waste is introduced from the second introduction part 61 of the first end part 41, and the object to be heated is heat-treated by the pyrolysis product.

Here, by providing the first introduction part 60 at a position lower than the second introduction part 61, the pyrolysis product from the separation part 21 is introduced from the lower part of the rotary kiln 11 and is sufficiently mixed with the object to be heated in the rotary kiln 11, and it is possible to perform efficient heat treatment.

In the rotary kiln 11, the object to be heated is incinerated, melted, or roasted. Those produced as a result of the heat treatment of the rotary kiln 11, for example, those produced by incineration, those produced by melting, and those produced by roasting are recovered as needed.

The exhaust gas exhausted from the second end part 42 of the rotary kiln 11 is sent to the secondary combustion chamber 12, and the exhaust gas is further burned in the secondary combustion chamber 12. The exhaust gas exhausted from the secondary combustion chamber 12 is sent to the heat recovery device 13, and the heat of the exhaust gas is recovered. The recovered heat is used, for example, as a heat source for the pyrolysis furnace 10.

According to the present embodiment, in the co-current rotary kiln 11, the object to be heated can be heated by using the pyrolysis product produced in the pyrolysis furnace 10, so that the heat treatment of the object to be heated can be performed at a high temperature in a short time without using the fossil fuel as a fuel. In addition, the pyrolysis furnace 10 can continuously and stably produce the pyrolysis product, and the pyrolysis product supplied from the pyrolysis furnace 10 is suitable for the co-current rotary kiln 11 in which the heat treatment is performed at a high temperature in a short time. In the co-current rotary kiln 11, the high-temperature pyrolysis product from the pyrolysis furnace 10 and the object to be heated are introduced from the same end part 41, so that the pyrolysis product immediately comes into contact with the object to be heated at a high temperature, and the object to be heated can be efficiently heat-treated in a short time. In addition, the high-temperature fluid to be sent from the pyrolysis furnace 10 to the rotary kiln 11 may contain fine particles of powdered circulation material and impurities of fly ash, which can be treated together with the object to be heated in the rotary kiln 11. Further, chars and fine particles contained in the high-temperature fluid produced in the pyrolysis furnace 10 have a higher radiant heat effect because of the light emission than the fossil fuel such as city gas, and are efficiently heated in the rotary kiln 11. The co-current rotary kiln 11 may include a recovery part that recovers the impurities sent from the pyrolysis furnace 10.

In a case where the biomass raw material is used as a raw material, the generation of CO₂ can be significantly reduced. In addition, the gas treatment equipment for detoxifying the generated gas can be minimized.

Since the heat treatment system 1 is provided with the heat recovery device 13, the heat of the high-temperature exhaust gas exhausted in a case where the co-current rotary kiln 11 is used is effectively used to realize the heat treatment system 1 with high heat efficiency as a whole.

Since the heat treatment system 1 is configured such that the pyrolysis product produced in the pyrolysis furnace 10 is sent to the rotary kiln 11 without being heat-recovered, the amount of heat (lower heating value + gas sensible heat) introduced into the rotary kiln 11 increases, and it becomes easier to raise the temperature of the rotary kiln 11. In addition, since the heat of the exhaust gas of the rotary kiln 11 is recovered and the combustion/flowing air of the pyrolysis furnace 11 is preheated, the heat can be recovered and the combustion/flowing air can be sufficiently preheated.

According to the invention, the heat treatment system 1 includes a device that uses the heat of the exhaust gas exhausted from the rotary kiln 11 as the heat source for the pyrolysis furnace 10. As shown in Fig. 2, the heat treatment system 1 recovers the heat of the exhaust gas with vapor and use the vapor for heating the combustion air (combustion/flowing air) of the pyrolysis furnace 10. In this case, the heat treatment system 1 includes an introduction duct 80 for combustion air leading to the main body container 20 of the pyrolysis furnace 10, an air preheater 81 provided in the introduction duct 80, and a vapor duct 82 that sends the vapor of the heat recovery device 13 to the air preheater 81. The vapor recovered from the heat of the exhaust gas by the heat recovery device 13 is sent to the air preheater 81 through the vapor duct 82, heat is exchanged between the vapor and the combustion air in the air preheater 81, and the high-temperature combustion air is introduced into the main body container 20 of the pyrolysis furnace 10 through the introduction duct 80. In such a case, the heat remaining in the co-current rotary kiln 11 is used in the pyrolysis furnace 10, so that the heat efficiency of the heat treatment system 1 can be further improved. In this example, the device that uses the heat of the exhaust gas exhausted from the rotary kiln 11 as the heat source for the pyrolysis furnace 10 is configured with the heat recovery device 13, the introduction duct 80, the air preheater 81, and the vapor duct 82.

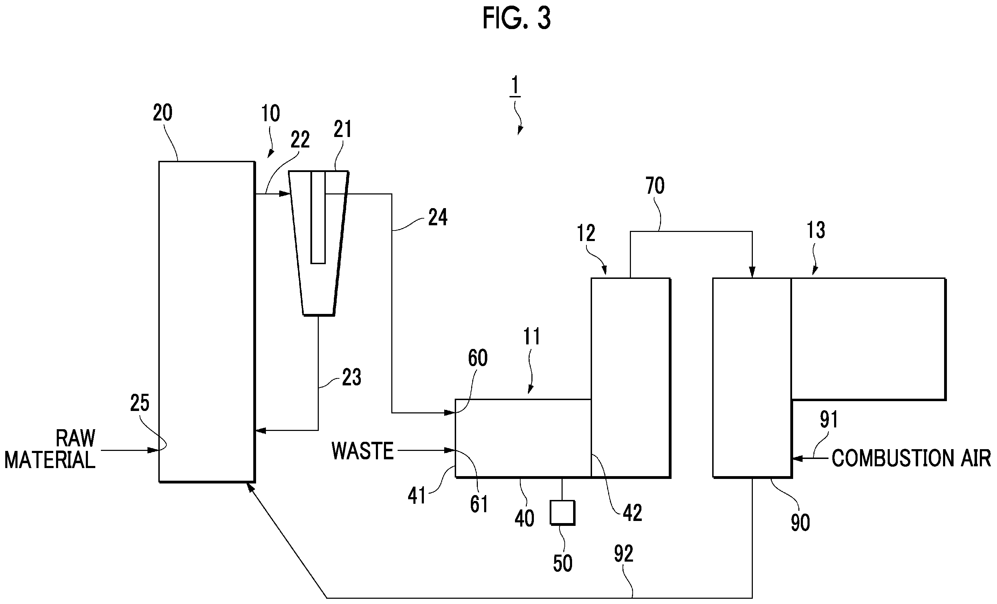

As shown in Fig. 3, the heat treatment system 1 may exchange the heat of the exhaust gas between gas and air, and use the air as the combustion air of the pyrolysis furnace 10. In this case, the heat treatment system 1 includes, for example, an air preheater 90 connected to the fourth duct 70, an introduction duct 91 for introducing the combustion air into the air preheater 90, and an introduction duct 92 for introducing the combustion air of the air preheater 90 into the pyrolysis furnace 10. Heat is exchanged between the exhaust gas exhausted from the co-current rotary kiln 11 and the combustion air introduced into the air preheater 90 through the introduction duct 91, and the high-temperature combustion air of the air preheater 90 is introduced into the main body container 20 of the pyrolysis furnace 10 through the introduction duct 92. In such a case, the heat remaining in the co-current rotary kiln 11 can be used in the pyrolysis furnace 10, so that the heat efficiency of the heat treatment system 1 can be further improved. In this example, the device that uses the heat of the exhaust gas exhausted from the rotary kiln 11 as the heat source for the pyrolysis furnace 10 is configured with, for example, the air preheater 90 and introduction ducts 91 and 92.

In the above embodiment, the heat recovery device 13 is a boiler, but the heat recovery device 13 may be another device as long as it recovers the heat of the exhaust gas. The heat treatment system 1 includes the secondary combustion chamber 12 and the heat recovery device 13, but the present embodiment can also be applied to a heat treatment system without the secondary combustion chamber 12 and the heat recovery device 13. In the above embodiment, the heat treatment system 1 does not use the fossil fuel at all, but can also be applied to a heat treatment system using the fossil fuel as an auxiliary fuel.

The heat treatment system 1 may be used not only as a system for incinerating waste in the co-current rotary kiln 11, but also as a system for melting waste to extract reusable metal or the like, and a system for sintering waste to smelt metal. That is, the rotary kiln 11 can be used as an industrial waste incinerator and melting furnace, a waste reduction furnace containing metal resources such as electric furnace dust, a waste roasting furnace containing metal resources such as used catalyst and batteries, and a melting furnace for a waste electronic substrate, or the like. In addition, the heat treatment system 1 is not limited to the waste treatment, and may be used for treatment such as pretreatment of steel and non-iron ore.

### Industrial Applicability

The present invention is useful in providing a heat treatment system capable of performing heat treatment such as waste treatment without using a fossil fuel as a main fuel in a co-current rotary kiln.

### Reference Signs List

- 1: Heat treatment system
- 10: Pyrolysis furnace
- 11: Co-current rotary kiln
- 12: Secondary combustion chamber
- 13: Heat recovery device

## Claims

1. A heat treatment system (1) comprising:
a pyrolysis furnace (10) that pyrolyzes a raw material to produce a pyrolysis product;
a co-current rotary kiln (11) that heats an object to be heated using the pyrolysis product produced in the pyrolysis furnace (10);
a heat recovery device (13) configured to recover heat of exhaust gas exhausted from the rotary kiln (11) with vapor;
an air preheater (81);
a first duct (82) configured to send the vapor from the heat recovery device (13) to the air preheater (81); and
a second duct (80) configured to introduce combustion air to the air preheater (81) to be heated by the vapor, and to introduce the heated combustion air from the air preheater (81) into the pyrolysis furnace (10),
wherein
the pyrolysis furnace (10) is configured to pyrolyze the raw material using the heated combustion air to produce the pyrolysis product.

2. The heat treatment system (1) according to claim 1, wherein the object to be heated is waste.

3. The heat treatment system (1) according to claim 1 or 2, wherein the raw material includes a biomass raw material.

4. The heat treatment system (1) according to any one of claims 1 to 3, wherein the pyrolysis product produced in the pyrolysis furnace (10) is configured to be sent to the rotary kiln (11) without being heat-recovered.

## Patentansprüche

1. Wärmebehandlungssystem (1), umfassend:
einen Pyrolyseofen (10), der ein Rohmaterial pyrolysiert, um ein Pyrolyseprodukt herzustellen;
einen Gleichstrom-Drehrohrofen (11), der ein zu erwärmendes Objekt erwärmt unter Verwendung des in dem Pyrolyseofen (10) hergestellten Pyrolyseprodukts;
eine Wärmerückgewinnungsvorrichtung (13), die so konfiguriert ist, dass sie Wärme des Abgases, das aus dem Drehrohrofen (11) mit Dampf austritt, zurückgewinnt;
einen Luftvorwärmer (81);
einen ersten Kanal (82), der so konfiguriert ist, dass er den Dampf von der Wärmerückgewinnungsvorrichtung (13) zu dem Luftvorwärmer (81) sendet; und
einen zweiten Kanal (80), der so konfiguriert ist, dass er Verbrennungsluft zu dem Luftvorwärmer (81) einleitet, um durch den Dampf erwärmt zu werden, und die erwärmte Verbrennungsluft aus dem Luftvorwärmer (81) in den Pyrolyseofen (10) einleitet,
wobei
der Pyrolyseofen (10) so konfiguriert ist, dass das Rohmaterial unter Verwendung der erwärmten Verbrennungsluft pyrolysiert, um das Pyrolyseprodukt herzustellen.

2. Wärmebehandlungssystem (1) nach Anspruch 1, wobei das zu erwärmende Objekt Abfall ist.

3. Wärmebehandlungssystem (1) nach Anspruch 1 oder 2, wobei das Rohmaterial ein Biomasse-Rohmaterial umfasst.

4. Wärmebehandlungssystem (1) nach einem der Ansprüche 1 bis 3, wobei das in dem Pyrolyseofen (10) hergestellte Pyrolyseprodukt so konfiguriert ist, dass es ohne Wärmerückgewinnung zu dem Drehrohrofen (11) gesendet wird.

## Revendications

1. Un système de traitement thermique (1) comprenant :
un four à pyrolyse (10) qui pyrolyse une matière première afin de produire un produit de pyrolyse ;
un four rotatif à courants parallèles (11) qui chauffe un objet à chauffer à l'aide du produit de pyrolyse produit dans le four à pyrolyse (10) ;
un dispositif de récupération de chaleur (13) configuré pour récupérer la chaleur des gaz d'échappement évacués par le four rotatif (11) avec de la vapeur ;
un réchauffeur d'air (81) ;
un premier conduit (82) configuré pour envoyer la vapeur qui provient du dispositif de récupération de chaleur (13) vers le réchauffeur d'air (81) ;
et
un deuxième conduit (80) configuré pour introduire de l'air de combustion dans le réchauffeur d'air (81) afin qu'il soit chauffé par la vapeur, et pour introduire l'air de combustion chauffé qui provient du réchauffeur d'air (81) dans le four à pyrolyse (10),
dans lequel
le four à pyrolyse (10) est configuré pour pyrolyser la matière première à l'aide de l'air de combustion chauffé afin de produire le produit de pyrolyse.

2. Le système de traitement thermique (1) selon la revendication 1, dans lequel l'objet à chauffer correspond à des déchets.

3. Le système de traitement thermique (1) selon la revendication 1 ou 2, dans lequel la matière première comporte une matière première de biomasse.

4. Le système de traitement thermique (1) selon l'une quelconque des revendications 1 à 3, dans lequel le produit de pyrolyse produit dans le four à pyrolyse (10) est configuré pour être envoyé vers le four rotatif (11) sans subir de récupération de chaleur.
